# EUROPÄISCHE PATENTSCHRIFT

(11) **EP 1 636 885 B1**
(45) Veröffentlichungstag und Bekanntmachung des Hinweises auf die Patenterteilung: **17.02.2016**
(21) Anmeldenummer: 04740352.2
(22) Anmeldetag: 26.06.2004
(51) Int. Cl.: H02B 1/052

(54) **MONTAGESYSTEM INSBESONDERE FÜR EINEN SCHALTSCHRANK**
MOUNTING SYSTEM, ESPECIALLY FOR A SWITCH CABINET
SYSTEME DE MONTAGE EN PARTICULIER POUR UNE ARMOIRE ELECTRIQUE

(30) Priorität: 26.06.2003 DE 10328708
(43) Veröffentlichungstag der Anmeldung: 22.03.2006
(73) Patentinhaber: TRUMPF Werkzeugmaschinen GmbH + Co. KG, 71254 Ditzingen (DE)
(72) Erfinder: QUERO, Jose, 71691 Freiberg (DE); TSIROGIANNIS, Vassilios, 74366 Kirchheim (DE); STIRNER, Achim, 73460 Hüttlingen (DE)
(74) Vertreter: Kohler Schmid Möbus Patentanwälte
(86) Internationale Anmeldenummer: PCT/EP2004/006949
(87) Internationale Veröffentlichungsnummer: WO 2004/114482

(56) Entgegenhaltungen:
- CH-A- 554 084
- DE-U- 20 119 837
- FR-A- 2 601 546
- GB-A- 2 064 225
- US-A- 4 073 563
- US-A1- 2002 182 933

## Beschreibung

Die Erfindung betrifft die Montage von Modulen insbesondere bei einem Schaltschrank.

Eine derartige Montage in einem Schaltschrank ist beispielsweise durch die DE 197 43 974 A1 bekannt geworden.

Dort ist ein Schaltschrank dargestellt und beschrieben, welcher einen Schaltschrankkasten mit mehreren Modulen aufweist. Die Module sind auf eine im Schaltschrank ortsfest angeordnete, hutförmig ausgebildete Tragschiene als Modulträger aufgebracht. Die Verbindung der einzelnen Module ist über Kontaktschwerter in den Modulen verwirklicht.

Die FR 2601546 offenbart eine Montageplatte, die eine einstückige Tragschiene aufweist.

Der Erfindung liegt die Aufgabe zu Grunde, die Montage von Modulen insbesondere bei einem Schaltschrank weiter zu verbessert.

Diese Aufgabe wird durch ein Schnellmontagesystem gelöst, bei welchem der Modulträger mindestens eine einstückig mit einer Modulträgerplatte aus der Modulträgerplatte ausgeschnitten und von der Modulträgerplatte abgekantet ausgebildete Tragschiene zur Halterung von Komponenten der Funktionsbaugruppe aufweist.

Bevorzugt ist die Tragschiene C-förmig ausgebildet, um das Festklemmen von Komponenten der Funktionsbaugruppe zu ermöglichen.

Es können zwei Tragschienen gegenüberliegend angeordnet sein, um das Befestigen der Komponenten der Funktionsbaugruppe noch weiter zu verbessern.

Eine schnelle Montage bzw. Demontage von Steckern, insbesondere von Doppelsteckern, wird erreicht, indem die Modulträgerplatte des Modulträgers eine Ausnehmung zum Einstecken und Verrasten eines Steckers aufweist. Dieser Clipmechanismus kann auch als eigenständige Erfindung angesehen werden.

Das Verrasten nach Art eines Clipmechanismus kann technisch dadurch umgesetzt werden, dass der Stecker federnd ausgebildete Beine mit Absätzen zum Übergreifen der Modulträgerplatte aufweist.

Zur übersichtlichen Kabelführung trägt ein Bügel zum Einstecken in den Modulträger bei. Der Bügel wirkt als Träger, über den die Kabel, Datenleitungen oder Energieleitungen geführt werden können. Lose herabhängende Kabel oder Leitungen an der Montageplatte werden vermieden. Der Bügel kann auch als eigenständige Erfindung angesehen werden.

Zur Zugentlastung der Kabel, Datenleitungen oder Energieleitungen ist eine Klemme mit einer einstellbaren Klemmplatte zum Einstecken in die Montageplatte vorgesehen. Die Klemme kann auch als eigenständige Erfindung angesehen werden.

Ein bevorzugtes Ausführungsbeispiel der Erfindung ist in der Zeichnung schematisch dargestellt und wird nachfolgend mit Bezug zu den Figuren der Zeichnung näher erläutert. Es zeigt:
- **Fig. 1**: eine perspektivische Darstellung eines Moduls auf einem Modulträger;
- **Fig.2**: eine perspektivische Darstellung des Moduls mit Modulträger nach Entfernung von Modulelementen nach Fig. 1;
- **Fig. 3**: das Modul sowie den Modulträger im Querschnitt nach Fig. 1;
- **Fig. 4**: eine Ansicht einer Querseite des Moduls mit Modulträger nach Fig. 1;
- **Fig. 5**: eine Ansicht der Unterseite des Moduls mit Modulträger nach Fig. 1;
- **Fig. 6**: eine perspektivische Darstellung eines Bügels zum Einsetzen in den Modulträger nach Fig. 1;
- **Fig. 7**: eine perspektivische Darstellung einer Klemme zum Einsetzen in die Schrankwand nach Fig. 8;
- **Fig. 8**: eine perspektivische Darstellung einer Schrankwand.

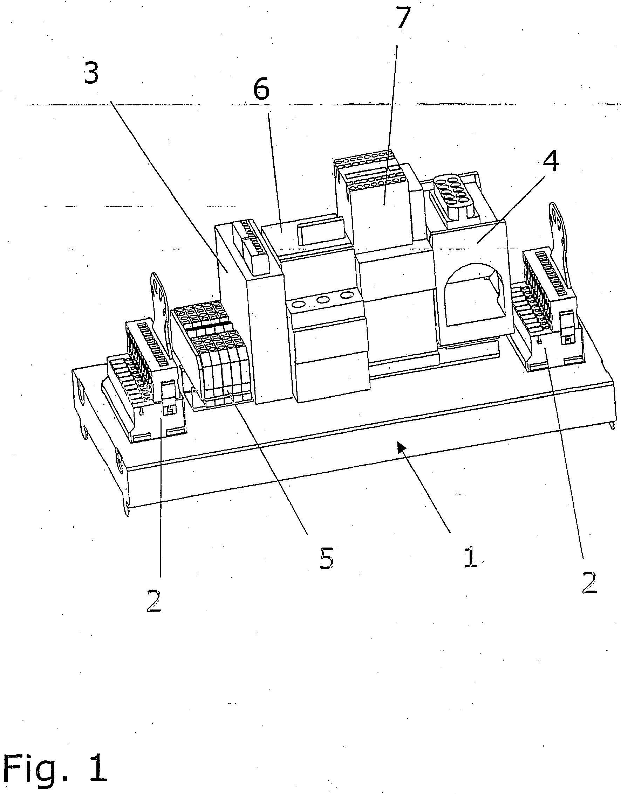

Die Gesamtheit aller Bauelement zur Ansteuerung und Regelung einer Energieversorgung / Stromversorgung eines Verbrauchers, wie beispielsweise eines Motors, eines HF-Generators, eines Ventils oder eines Heizelements, ist gemäß **Fig. 1** als Funktionsbaugruppe auf einem Modulträger **1** aus Metallblech untergebracht. Auf dem Modulträger sind mehrere- einzelne ---an sich bekannte und daher nicht beschriebene Komponenten der Funktionsbaugruppe, wie Doppelstecker **2** und Ein- und Ausgangsbaugruppen **3** und **4,** Klemmen **5,** von denen nur eine mit der Bezugsziffer 5 bezeichnet ist, und Schalter **6** und **7** untergebracht. Analog zu dieser Funktionsbaugruppe, welche beispielhaft beschrieben ist, können beliebig viele weitere Funktionsbaugruppen vormontiert vorgesehen sein. Die Funktionsbaugruppe und der Modulträger 1 sind Teil eines Maschinen- und Bauteile-neutralen Modul- und Baukastensystems, welches eine Vielzahl dieser Bauteile umfassen kann. Die geschaffenen Funktionsbaugruppen orientierten, neutralen Module aus der Funktionsbaugruppe und dem Modulträger 2 lassen sich nach Art eines "Plug & Play" an dem Schaltschrank einstecken, erkennen, ansteuern und mit anderen Komponenten kombinieren.

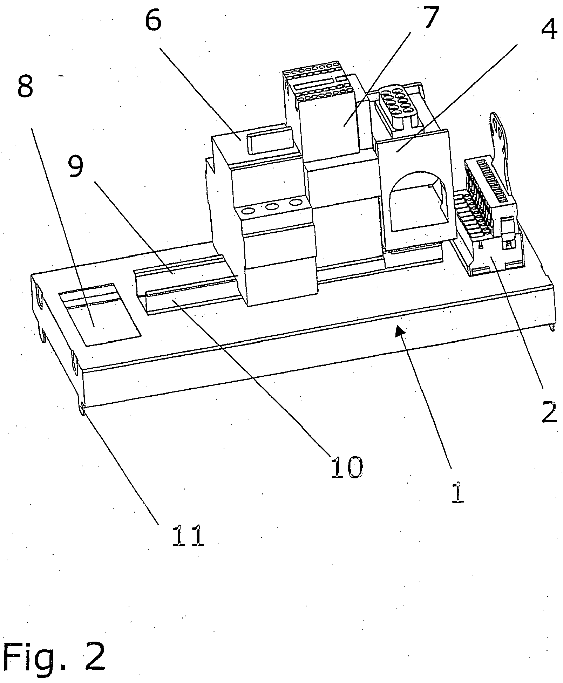

Aus der **Fig. 2** ist ersichtlich, wie der Modulträger 1 aufgebaut ist. Der einstückig aus einem Metallblech durch Schneiden und Abkanten hergestellte Modulträger 1 weist eine Ausnehmung **8** zum Einstecken und Fixieren des Doppelsteckers 2 bzw. 4 durch Verrasten auf. Der Übersicht halber sind die Klemmen 5 und der Doppelstecker 2 in der Fig. 2 nicht dargestellt. Es ist zu erkennen, dass der Modulträger 1 zwei C-förmig ausgestaltete Tragschienen **9** und **10** aufweist.-Die Tragschienen 9 und 10 können beispielsweise aus dem Metallblech ausgeschnitten, abgekantet bzw. hochgebogen oder aufgerichtet werden. Die Tragschienen 9 und 10 dienen der Halterung der Komponenten der Funktionsbaugruppe.

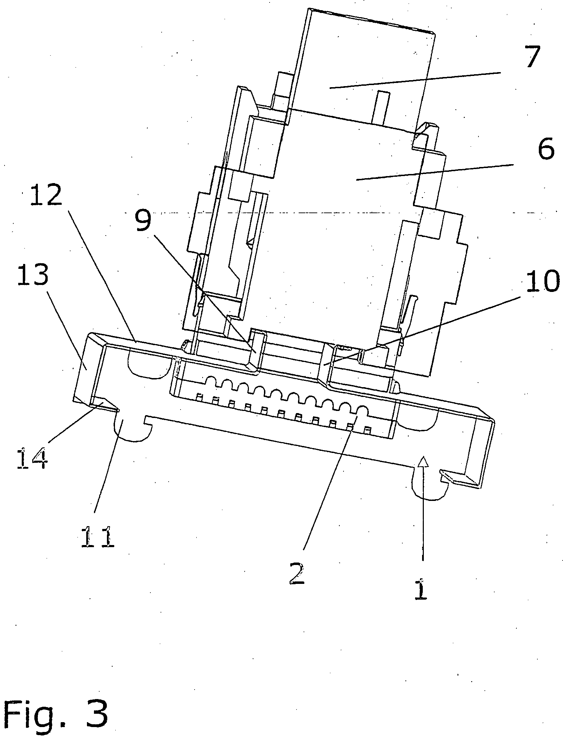

Die Ausgestaltung der Tragschienen 9 und 10 ist der Schnittdarstellung gemäß. **Fig. 3** noch deutlicher zu entnehmen. In den Fig. 2 und 3 ist auch dargestellt, dass der Modulträger 1 L-förmig ausgestaltete Laschen **11** zum Einhängen des Modulträgers 1 in eine Schaltschrankwand aufweist. Jeweils einer Ecke des Modulträgers 1 ist eine Lasche 11 zugeordnet. Fig. 3 zeigt auch, dass der Modulträger 1 eine Modulträgerplatte **12** und abgekantete, umlaufende seitliche Randbereiche **13** und untere Randbereiche **14** aufweist, so dass ein nach unten offener Hohlraum des Modulträgers 1 entsteht, welcher zur Unterbringung von Daten- und oder Energieleitungen zur Verfügung steht.

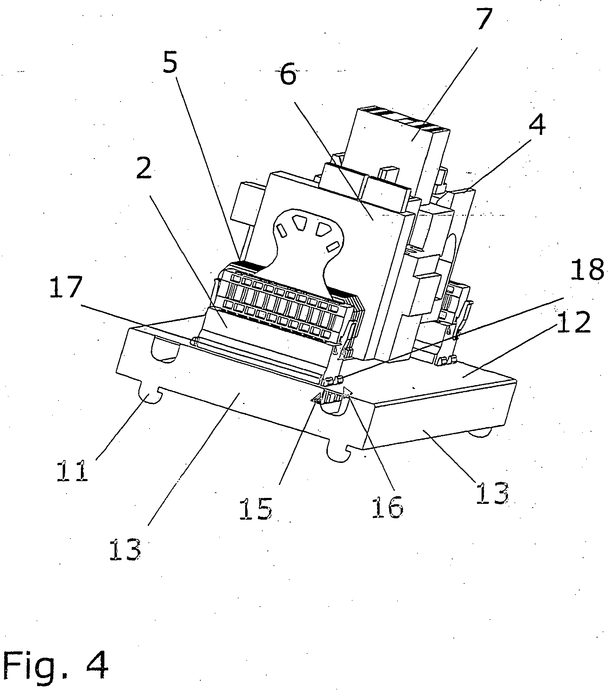

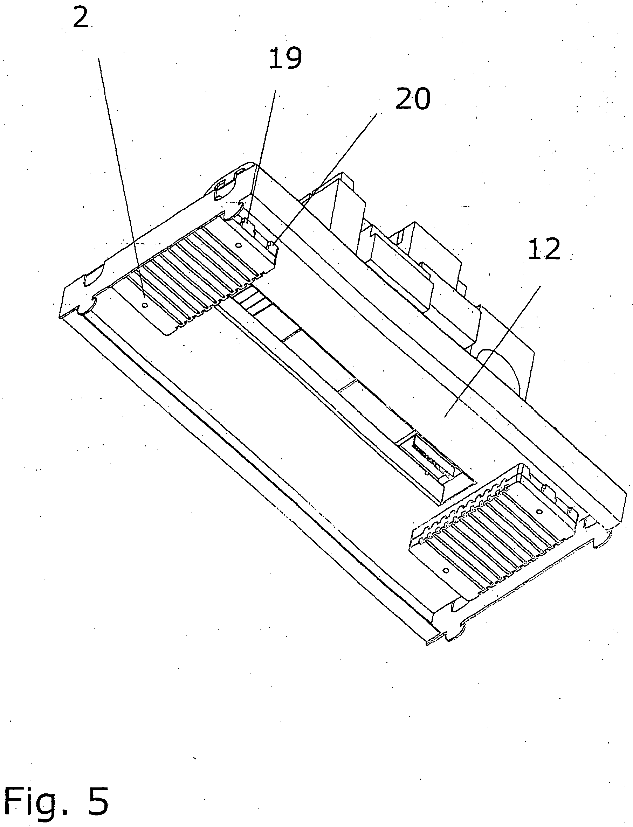

Die Abdeckung der Leitungen wird auch aus **Fig. 4** ersichtlich. Zusätzlich zeigt Fig. 4, dass die Doppelstecker 2 auf zwei gegenüberliegen Seiten angeordnete, in Richtung seitlichem Rand der Modulträgerplatte 12 federnd ausgebildete Beine **15** und **16** umfassen, welche die Modulträgerplatte 12 derart übergreifen, dass die Modulträgerplatte 12 zwischen Absätzen **17** und **18** der Beine 15 und 16 und Anschlägen **19** und **20** des Doppelsteckers 2 unterhalb der Modulträgerplatte 12 lösbar eingeklemmt wird (siehe **Fig.** 5). Beim Einstecken des Doppelsteckers 2 von unten in die Modulträgerplatte 12 werden die Absätze 17 und 18 über ihre Schrägflächen seitlich nach innen gedrückt und übergreifen anschließend rückfedernd die Modulträgerplatte 12.

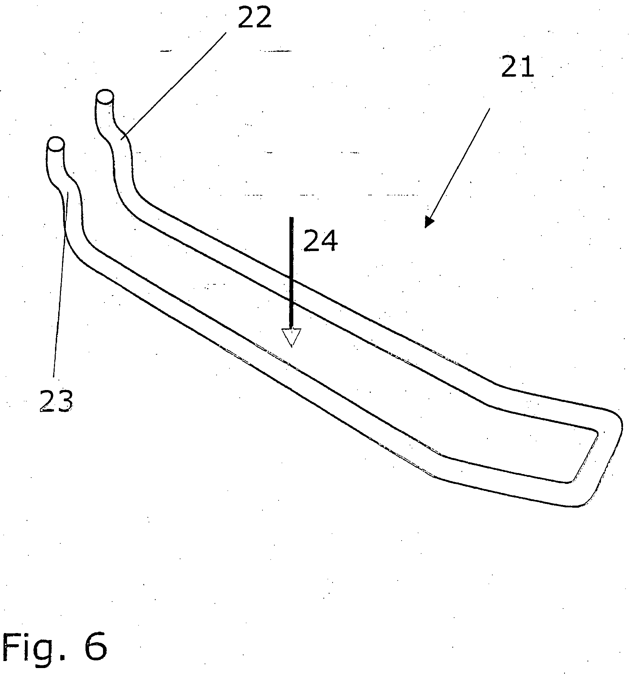

Ein U-förmiger Bügel **21** gemäß **Fig. 6** wirkt im eingesteckten oder eingehängten Zustand am Modulträger als Träger für ein Kabel oder einen Kabelbaum. Die freien Enden **22** und **23** können -in Löcher des Modulträger eingeführt werden, so dass sich die Enden 22 und 23 auf Grund der leicht S-förmige Ausgestaltung bei Belastung des Bügels 21 in Pfeilrichtung **24** am Modulträger abstützen und verhaken. Der Bügel 21 kann für eine übersichtliche Kabelführung entlang der Schaltschrankwand sorgen.

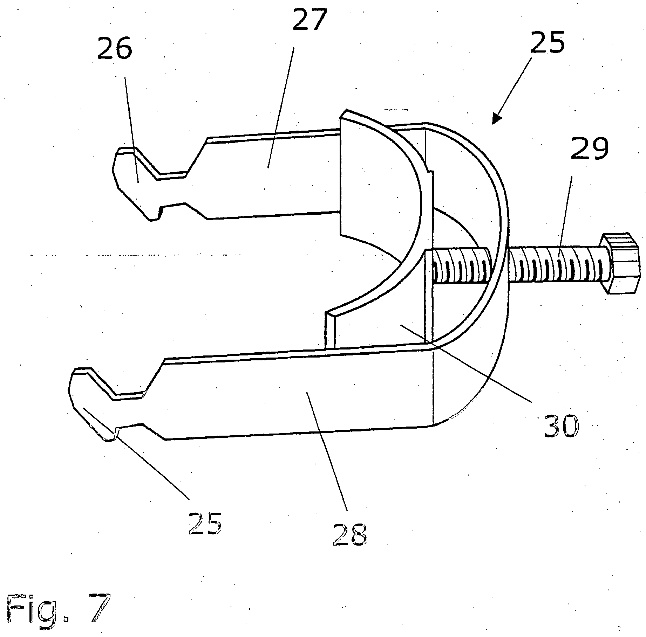

Eine Klemme 25 gemäß **Fig. 7** kann über ihre T-förmigen freien Schenkelenden **25** und **26** in entsprechende Löcher der Schaltschrankwand eingehängt werden. Zwischen den Schenkeln' **27** und **28** ist über eine Einstellschraube **29** eine Klemmplatte **30** verschiebbar angeordnet. Zwischen der Schaltschrankwand und den Schenkeln 27 und 28 sowie der Einstellschraube 29 kann ein Kabel oder ein Kabelbaum zugentlastend eingeklemmt werden.

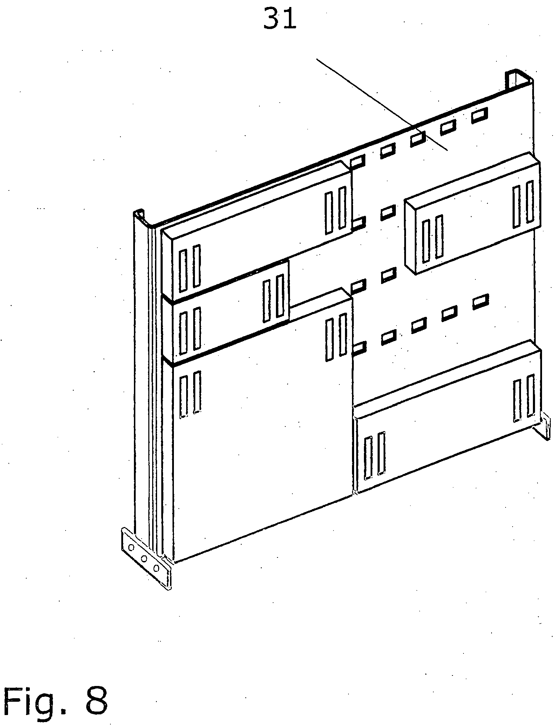

**Fig. 8** zeigt, wie die Funktionsbaugruppen orientierten Module jeweils über Modulträger an einer aus Metallblech gefertigten, durch eine Schrankwand **31** ausgebildeten Schnellmontageplatte beispielsweise eines nicht weiter dargestellten, an sich bekannten Schaltschrankgehäuses über Laschen eingehängt werden können, welche in Ausnehmungen oder Löcher eingesteckt sind. Eine Kopplung der Funktionsbaugruppen der Modul erfolgt über Schnittstellen und Verbindungskabel eines Bussystems. Die Schrankwand 31 weist eine Vielzahl solcher Ausnehmungen auf, um den Modulträger, den Bügel und die Klemme unterschiedlich zu positionieren und / oder weitere Modulträgers mit weiteren Funktionsgruppen anzubringen. Mit Hilfe einer Befestigungsschraube oder eines Riegels kann der austauschbar und lösbar montierte Modulträger an der Schrankwand zusätzlich arretiert werden.

### BEZUGSZEICHENLISTE

- **1**: Modulträgers
- **2**: Doppelstecker
- **3**: Stecker
- **4**: Stecker
- **5**: Klemme
- **6**: Schalter
- **7**: Schalter
- **8**: Ausnehmung
- **9**: Tragschiene
- **10**: Tragschiene
- **11**: Lasche
- **12**: Modulträgerplatte
- **13**: Oberer Randbereich
- **14**: Unterer Randbereich
- **15**: Bein
- **16**: Bein
- **17**: Absatz
- **18**: Absatz
- **19**: Anschlag
- **20**: Anschlag
- **21**: Bügel
- **22**: Ende
- **23**: Ende
- **24**: Belastungsrichtung
- **25**: Schenkelende
- **26**: Schenkelende
- **27**: Schenkel
- **28**: Schenkel
- **29**: Einstellschraube
- **30**: Klemmplatte
- **31**: Schaltschrankwand

## Patentansprüche

1. Montagesystem mit einer Montageplatte (31), und mit einem an der Montageplatte (31) befestigbaren Modulträgers (1) einer Funktionsbaugruppe, die Bauelemente zur Ansteuerung und Regelung einer Energieversorgung eines Verbrauchers als Komponenten umfasst, wobei der Modulträger (1) mindestens eine einstückig mit einer Modulträgerplatte (12) aus der Modulträgerplatte (12) ausgeschnitten und von der Modulträgerplatte (12) abgekantet ausgebildete Tragschiene (9, 10) zur Halterung von Komponenten der Funktionsbaugruppe aufweist, **dadurch gekennzeichnet daß** die Modulträgerplatte (12) des Modulträgers (1) eine Ausnehmung (8) zum Einstecken und Verrasten eines Steckers (2) aufweist, und wobei ein Bügel (21) für Kabelführung zum Einstecken in den Modulträger (1) vorgesehen ist.

2. Montagesystem nach Anspruch 1, **dadurch gekennzeichnet, dass** die Tragschiene (9, 10) C-förmig ausgebildet.

3. Montagesystem nach Anspruch 1 oder 2, **dadurch gekennzeichnet, dass** zwei Tragschienen (9, 10) gegenüberliegend angeordnet sind.

4. Montagesystem nach einem der vorhergehenden Ansprüche, **dadurch gekennzeichnet, dass** eine Klemme (25) mit einer einstellbaren Klemmplatte (30) zum Einstecken in die Montageplatte (31) vorgesehen ist.

## Claims

1. Mounting system having a mounting plate (31) and having a module carrier (1) of a functional module that can be fastened to the mounting plate (31), said functional module comprising devices for controlling and regulating an energy supply to a consumer as components, wherein the module carrier (1) comprises at least one support rail (9, 10) embodied with a module carrier plate (12) as a single piece and cut out from the module carrier plate (12) and bent off the module carrier plate (12) to hold components of the functional module, **characterized in that** the module carrier plate (12) of the module carrier (1) comprises a recess (8) for the insertion and locking of a plug (2) and wherein a bracket (21) is provided for cable routing for insertion in the module carrier (1).

2. Mounting system according to Claim 1, **characterized in that** the support rail (9, 10) is of C-shaped design.

3. Mounting system according to Claim 1 or 2, **characterized in that** two support rails (9, 10) are arranged opposite one another.

4. Mounting system according to one of the preceding claims, **characterized in that** a clamp (25) is provided with an adjustable clamping plate (30) for insertion into the assembly plate (31).

## Revendications

1. Système de montage comprenant une platine de montage (31), et un support (1) de modules qui peut être fixé à ladite platine de montage (31) et fait partie d'un groupe structurel fonctionnel incluant, en tant que composants, des éléments structurels dévolus au pilotage et à la régulation d'une alimentation en énergie d'un appareil consommateur, ledit support (1) de modules présentant au moins un rail de support (9, 10) faisant corps avec une platine (12) porte-modules, découpé à partir de ladite platine (12) porte-modules, réalisé par pliage à partir de ladite platine (12) porte-modules et affecté à la retenue de composants du groupe structurel fonctionnel, **caractérisé par le fait que** la platine (12) porte-modules du support (1) de modules est pourvue d'un évidement (8) destiné à l'emboîtement et à l'encliquetage d'une prise enfichable (2), un étrier (21) de guidage d'un câblage étant prévu pour être emboîté dans ledit support (1) de modules.

2. Système de montage selon la revendication 1, **caractérisé par le fait que** le rail de support (9, 10) est réalisé avec configuration en C.

3. Système de montage selon la revendication 1 ou 2, **caractérisé par le fait que** deux rails de support (9, 10) sont disposés en regard l'un de l'autre.

4. Système de montage selon l'une des revendications précédentes, **caractérisé par le fait qu'**une pince (25), dotée d'une plaquette réglable de coincement (30), est prévue pour être emboîtée dans la platine de montage (31).
